# EUROPEAN PATENT APPLICATION

(11) **EP 2 871 576 A1**
(43) Date of publication of application: **13.05.2015**
(21) Application number: 14191633.8
(22) Date of filing: 04.11.2014
(51) Int. Cl.: G06F 11/20, G06F 11/14, G06F 3/06

(54) **Data allocation method, data allocation program, and information processing system**

(30) Priority: 11.11.2013 JP 2013232884
(71) Applicant: FUJITSU LIMITED, Kawasaki-shi, Kanagawa 211-8588 (JP)
(72) Inventor: Kobashi, Hiromichi, Hayes, Middlesex UB4 8FE (GB); Tsuchimoto, Yuichi, Kanagawa, 211-8588 (JP)
(74) Representative: Hoffmann Eitle

(57) **Abstract**

Nodes allocate auxiliary data blocks that are the backup of main data blocks to the nodes in a distributed manner. Each node that holds auxiliary data blocks stores therein management information indicating correspondences between the main data blocks corresponding to the auxiliary data blocks held by the own node and nodes holding the main data blocks.

## Description

### FIELD

The embodiments discussed herein relate to a data allocation method, a data allocation program, and an information processing system.

### BACKGROUND

Currently, there may be employed distributed storage systems in which data is stored in a plurality of nodes connected over a network, in a distributed manner. One example of the distributed storage systems is a distributed key-value store in which each node stores pairs of key and value as data records. In the distributed key-value store, for example, a node that is to store a value corresponding to a key is determined from among a plurality of nodes on the basis of the hash value of the key.

In a distributed storage system, copies of data may be stored in a plurality of nodes so as to tolerate failures of less than a predetermined number of nodes. For example, by storing the same data in three nodes, it becomes possible to tolerate failures occurring in up to two nodes at the same time. In the case of creating data redundancy, only one of a plurality of nodes that store the same data may receive and execute read and write instructions regarding the data, and the other nodes may manage the data as backup data. The former data, which is processed in response to the read and write instructions, is called main data, and the latter backup data is called auxiliary data.

To use the resources of a plurality of nodes, there is an idea of causing each node to manage both main data and auxiliary data, without a node for managing the main data or a node for managing the auxiliary data. For example, there is a proposal in which a server holds the data of the own server in its original-data area and holds the data of the other servers in a synchronous-data area. In this proposal, if a failure occurs in a server, another server holding the data of the failed server in its synchronous-data area is caused to take over for the failed server.

In this connection, in a system that includes a first secondary site that is associated with a primary site by synchronous remote copy and a second secondary site that is associated with the primary site by asynchronous remote copy, there is a method for performing data synchronization between these secondary sites when a failure occurs in the primary site. There is another proposal in which, if one server fails in updating an application while a plurality of servers updates the application, all of the servers cancel the update so as to return the application to the previous version prior to the update.

Please see, for example, Japanese Laid-open Patent Publications Nos. 2009-265973, 2006-119745, and 2004-86769.

There is an idea of storing information (management information) indicating correspondences between main data and nodes storing the main data, in each node. When accessing a certain main data block, each node determines which node to access, on the basis of the management information. At this time, by dividing the task of determining which node to access, among the nodes, these nodes do not need to hold the management information on all main data blocks, thereby distributing the workload of determining which node to access, among the nodes. If a node fails to detect a node holding a desired main data block with reference to the management information held by the own node, the node may make an inquiry to another node.

In this idea, there is a problem with how to distribute the management information among the nodes. For example, in the case where a node (failed node) becomes unavailable due to a failure or the like, each node is able to detect the main data stored in the failed node on the basis of the management information. For example, each node is able to confirm whether the auxiliary data stored in the own node corresponds to the main data stored in the failed node or not, on the basis of the management information, and then to restore the main data in a node other than the failed node using the corresponding auxiliary data. In this case, however, each node needs to confirm whether each auxiliary data block stored in the own node corresponds to the main data stored in the failed node or not. Therefore, if the management information is distributed randomly among the nodes, there may cause a lot of inquiries between the nodes for the confirmation, which increases the amount of communication between the nodes.

### SUMMARY

According to one aspect, the present invention intends to provide a data allocation method, data allocation program, and information processing system for reducing the amount of communication between nodes.

According to one aspect, there is provided a data allocation method executed in a system including a plurality of nodes to which a plurality of main data blocks is allocated in a distributed manner. The data allocation method includes: allocating, by a processor, a plurality of auxiliary data blocks to the plurality of nodes in a distributed manner, the plurality of auxiliary data blocks being backup of the plurality of main data blocks; storing, by the processor, in a node holding auxiliary data blocks, information indicating correspondences between main data blocks corresponding to the auxiliary data blocks and nodes holding the main data blocks; and determining, by the processor, upon receipt of an access request to access one of the plurality of the main data blocks, a node to be accessed, based on the information indicating the correspondences between the main data blocks and the nodes holding the main data blocks.

### BRIEF DESCRIPTION OF DRAWINGS

FIG. 1 illustrates an information processing system according to a first embodiment;
FIG. 2 illustrates an information processing system according to a second embodiment;
FIG. 3 illustrates an example of an allocation of master data blocks;
FIG. 4 illustrates an example of a hardware configuration of a node;
FIG. 5 illustrates an example of functions of the node;
FIGS. 6A, 6B, and 6C illustrate an example of segment management tables;
FIG. 7 illustrates an example of a segment handing table;
FIG. 8 illustrates an example of a backup handling table;
FIG. 9 illustrates an example of an allocation of backup data blocks;
FIG. 10 is a flowchart illustrating an example of allocating backup data blocks;
FIG. 11 is a flowchart illustrating an example of changing the allocation of master data blocks;
FIG. 12 is a flowchart illustrating an example of a process to be performed at the time of failure;
FIG. 13 is a flowchart illustrating an example of changing the allocation of backup data blocks;
FIG. 14 illustrates an example of the allocation of master data blocks at the time of failure;
FIG. 15 illustrates an example of the allocation of backup data blocks at the time of failure;
FIG. 16 illustrates a specific example of changing the allocation of master data blocks;
FIGS. 17 and 18 illustrate a specific example of a process to be performed at the time of failure;
FIGS. 19A and 19B illustrate comparative examples of changing the allocation of master data blocks; and
FIG. 20 illustrates a comparative example of a process to be performed at the time of failure.

### DESCRIPTION OF EMBODIMENTS

Several embodiments will be described below with reference to the accompanying drawings, wherein like reference numerals refer to like elements throughout.

### (First Embodiment)

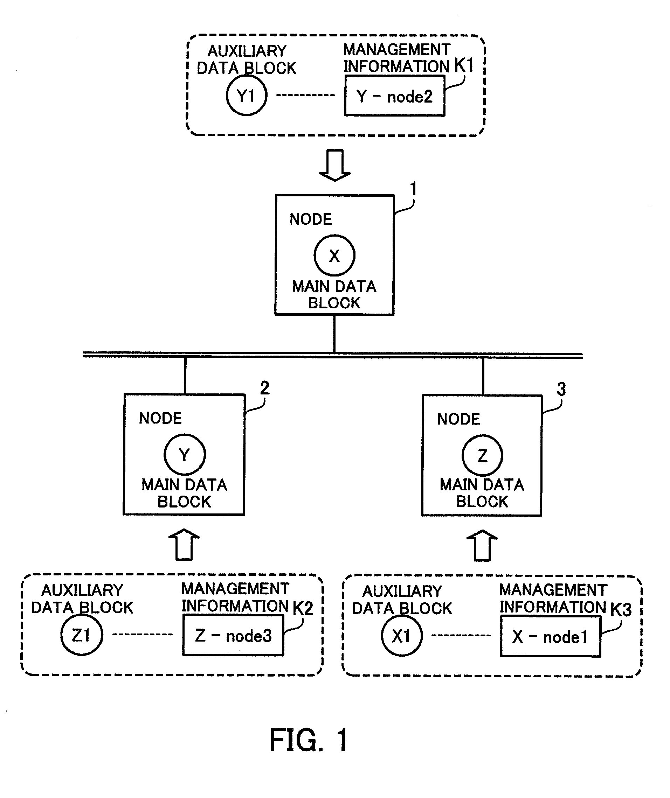

FIG. 1 illustrates an information processing system according to a first embodiment. The information processing system of the first embodiment includes nodes 1, 2, and 3, which are connected over a network. The nodes 1, 2, and 3 may be information processing apparatuses or storage devices. For example, each node 1, 2, and 3 may be a computer that is provided with a storage device, such as a Random Access Memory (RAM), Hard Disk Drive (HDD), etc., and a processor, such as a Central Processing Unit (CPU), an Application Specific Integrated Circuit (ASIC), etc. Processes that will be described below may be performed by the processor of each node 1, 2, and 3 executing programs stored in the storage device of the node 1, 2, and 3. In the following description, each node 1, 2, and 3 stores various kinds of information in the storage device thereof.

The nodes 1, 2, and 3 store a plurality of data blocks in a distributed manner. The nodes 1, 2, and 3 receive instructions to read and write data blocks (data access request) from a client device (not illustrated). It is now assumed that data blocks to be processed in response to access requests from the client device are called main data blocks. When receiving an access request to access a main data block, the node 1, 2, and 3 determines which node to access, on the basis of information indicating correspondences between main data blocks and nodes storing the main data blocks. This information is called management information.

The nodes 1, 2, and 3 store a plurality of auxiliary data blocks that are the backup of a plurality of main data blocks, in a distributed manner. Each node 1, 2, and 3 stores therein management information indicating correspondences between the main data blocks corresponding to the auxiliary data blocks stored in the own node and the nodes storing the main data blocks. As the correspondences, direct or indirect correspondences are made between the main data blocks and the nodes. In the case of using the indirect correspondences, there is a method of, for example, registering correspondences between the main data blocks and prescribed keys in the management information, and detecting a node holding a main data block with a calculation using the corresponding key (for example, calculation of a hash value from the key).

For example, the nodes 1, 2, and 3 store main data blocks X, Y, and Z in a distributed manner. More specifically, the main data blocks X, Y, and Z are stored in the nodes 1, 2, and 3, respectively.

In addition, the nodes 1, 2, and 3 store auxiliary data blocks X1, Y1, and Z1 in a distributed manner. The auxiliary data blocks X1, Y1, and Z1 are the backup of the main data blocks X, Y, and Z, respectively. More specifically, the auxiliary data block X1 is stored in the node 3, the auxiliary data block Y1 is stored in the node 1, and the auxiliary data block Z1 is stored in the node 2. For example, the nodes 1, 2, and 3 communicate with each other to reflect updates made on the main data blocks X, Y, and Z in the auxiliary data blocks X1, Y1, and Z1.

In this case, the node 1 stores management information K1 that indicates a correspondence between the main data block Y and the node 2 because the node 1 stores the auxiliary data block Y1. The node 2 stores management information K2 that indicates a correspondence between the main data block Z and the node 3 because the node 2 stores the auxiliary data block Z1. The node 3 stores management information K3 that indicates a correspondence between the main data block X and the node 1 because the node 3 stores the auxiliary data block X1.

According to the information processing system of the first embodiment, a plurality of main data blocks and a plurality of auxiliary data blocks are allocated to a plurality of nodes in a distributed manner. A node that holds auxiliary data blocks stores management information indicating correspondences between the main data blocks corresponding to the auxiliary data blocks and other nodes holding the main data block.

This reduces the amount of communication that is performed between the nodes to restore a main data block. In the case where a node (failed node) becomes unavailable due to a failure or the like, each node detects the main data blocks stored in the failed node on the basis of the management information. For example, each node confirms whether an auxiliary data block stored in the own node corresponds to a main data block stored in the failed node or not, and to restore the main data block in a node different from the failed node using the corresponding auxiliary data block. In this case, however, each node needs to confirm whether each of the auxiliary data blocks stored in the own node corresponds to any of the main data blocks stored in the failed node or not. Therefore, if the management information is distributed randomly among the nodes, there may cause a lot of inquiries between the nodes, which may increase the amount of communication between the nodes.

Specifically, assume the case where the node 1 holds the auxiliary data block Y1 and the management information K2, the node 2 holds the auxiliary data block Z1 and the management information K1, and the node 3 becomes unavailable due to a failure or the like. In this case, the node 1 makes an inquiry to the node 2 as to whether the auxiliary data block Y1 held by the own node 1 corresponds to the main data block Z held by the node 3 or not. In addition, the node 2 makes an inquiry to the node 1 as to whether the auxiliary data block Z1 held by the own node 2 corresponds to the main data block Z held by the node 3 or not. In this way, the nodes need to make inquiries depending on how the management information is distributed among the nodes. If there are more data blocks to be inquired, more communication is performed for the inquiries, which causes an increase in the load of the network.

By contrast, in the first embodiment, the node 1 stores the auxiliary data block Y1 and the management information K1. The node 2 stores the auxiliary data block Z1 and the management information K2. The node 3 stores the auxiliary data block X1 and the management information K3. Therefore, even if the node 3 becomes unavailable, the node 1 is able to confirm with reference to the management information K1 whether the auxiliary data block Y1 corresponds to the main data block Z stored in the node 3 or not. Similarly, the node 2 is able to confirm with reference to the management information K2 whether the auxiliary data block Z1 corresponds to the main data block Z stored in the node 3 or not. That is to say, each of the nodes 1 and 2 does not need to make an inquiry to another node as to whether the auxiliary data block held by the own node corresponds to the main data block Z stored in the node 3 or not. This reduces the amount of communication that is performed between the nodes to restore the main data block.

In this case, since the node 2 holds the auxiliary data block Z1 corresponding the main data block Z stored in the node 3, the node 2 restores the main data block Z in either one (a node that is to handle the processing of the main data block Z, in place of the node 3) of the nodes 1 and 2.

By the way, if a main data block (for example, main data block Z) and its corresponding auxiliary data block (for example, auxiliary data block Z1) are allocated to the same node (for example, node 3), it may be difficult to restore the main data block if the node becomes unavailable. To deal with this, there is an idea of allocating the auxiliary data block corresponding to each main data block to at least two nodes. For example, in the case where the node 3 holds the main data block Z, the auxiliary data block Z1 is stored in both the nodes 2 and 3, and the management information K2 is also stored in both the nodes 2 and 3. By doing so, even if the node 3 becomes unavailable, the node 2 is able to restore the main data block Z. This makes it possible to improve the reliability of the information processing system against failures.

### (Second Embodiment)

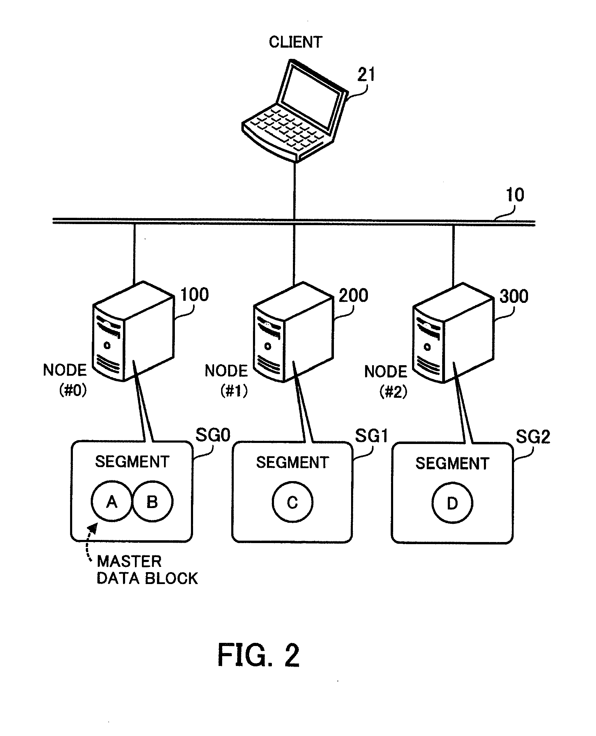

FIG. 2 illustrates an information processing system according to a second embodiment. An information processing system of the second embodiment includes a client 21 and nodes 100, 200, and 300. The nodes 100, 200, and 300 and the client 21 are connected to a network 10. The network 10 may be a Local Area Network (LAN), a Wide Area Network (WAN), the Internet, or another.

The client 21 is a computer serving as a terminal device, which is operated by a user. When writing or reading a data block, the client 21 accesses any one of the nodes 100, 200, and 300. As a node to be accessed, any node may be selected, regardless of what is the data block. That is to say, in this information processing system, a centralized management node, which may become a bottleneck, is not provided, and all the nodes are able to receive access requests from the client 21. In addition, the client 21 does not need to have any information indicating which node stores which data blocks.

The nodes 100, 200, and 300 are server computers that store and manage data blocks in non-volatile storage devices. Data blocks stored in the nodes 100, 200, and 300 include master data blocks. The master data blocks are data that is to be processed in response to read or write instructions (access requests) from, mainly, the client 21. A task of processing master data blocks in the nodes 100, 200, and 300 may be called a master process. The master data blocks are one example of the main data blocks of the first embodiment.

The nodes 100, 200, and 300 store master data blocks A, B, C, and D. The nodes 100, 200, and 300 manage the master data blocks A, B, C, and D in segments. A segment is a unit of storage area available to the nodes. When receiving an access request to access a master data block from the client 21, the nodes 100, 200, and 300 prefetch data blocks into a cache (that is, for example, a predetermined storage area of the RAM and is provided in the node) on a segment basis. For example, allocating master data blocks that are likely to be accessed sequentially to the same segment improves a cache hit rate for subsequent access requests from the client 21.

More specifically, the node 100 has a segment SG0, to which master data blocks A and B is allocated. The node 200 has a segment SG1, to which master data block C is allocated. The node 300 has a segment SG2, to which master data block D is allocated. If no combination of master data blocks that are likely to be accessed sequentially is found, a single master data block may be allocated, as in the segments SG1 and SG2.

In addition, as will be described later, the nodes 100, 200, and 300 store backup data blocks that are the backup of master data blocks. Updates made in the master process are reflected in the backup data blocks. A process of synchronizing the backup data blocks with the master data blocks may be called a backup process. The backup data blocks are one example of the auxiliary data blocks of the first embodiment.

More specifically, in the information processing system of the second embodiment, to improve fault tolerance, the same data block is stored in redundancy in a plurality of nodes. Of the plurality of nodes storing the same data block, one node processes access requests from the client 21, and the other nodes manage the data block just as a backup copy. In view of a certain data block, a node that performs the master process may be called a master node, and a node that performs the backup process may be called a backup node. Each node may perform both the master process and the backup process, and in this case, each node is a master node for some data blocks (in charge of performing the master process) and is a backup node for some data blocks (in charge of performing the backup process). As will be described later, a single node may play the roles of both a backup node and a master node for a single data block.

Backup data blocks are not read in response to read instructions from the client 21. However, when a master data block (the original data block corresponding to a backup data block) is updated in response to a write instruction from the client 21, the backup data blocks corresponding to the master data block may be updated so as to maintain data consistency.

Each node is assigned master data blocks for which the node needs to handle the master process, on the basis of the hash values of the IDs of segments (segment IDs). When receiving an access request from the client 21, a node obtains the segment ID of the segment to which the master data block specified by the client 21 belongs, on the basis of the data name of the master data block. Then, the node calculates the hash value of the segment ID, and detects a master node that handles the master process for the master data block identified by the data name. If another node is the master node, the node transfers the access request to the other node.

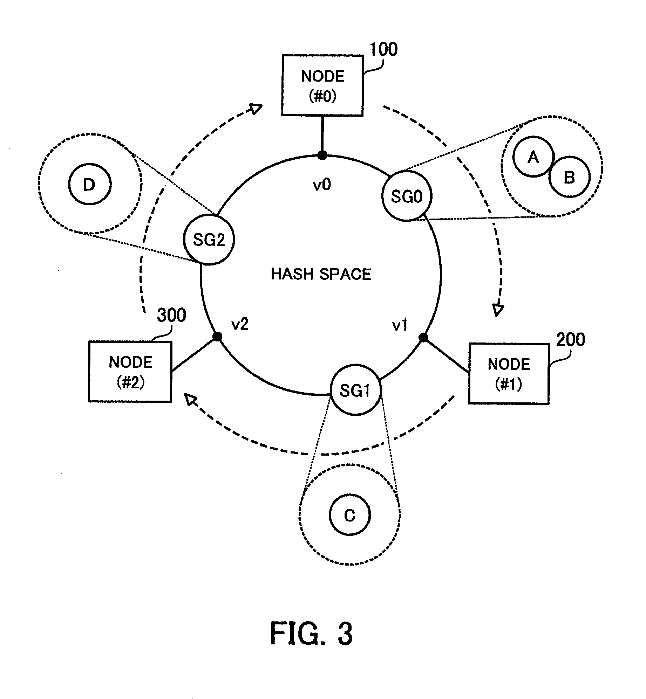

FIG. 3 illustrates an example of an allocation of master data blocks. When allocating master data blocks to the nodes 100, 200, and 300, a hash space is defined by forming the range of hash values of segment IDs in a ring, as illustrated in FIG. 3. For example, in the case where a hash value is expressed in L bits, the hash space is defined such that the 2^{L}-1 (the largest hash value) wraps around to zero.

In the hash space, a point (hash value) corresponding to each node is set. The hash value corresponding to a node is, for example, a hash value of an address, such as an Internet Protocol (IP) address, of the node. Referring to the example of FIG. 3, hash values v0, v1, and v2 (v0<v1<v2) respectively corresponding to the nodes 100, 200, and 300 are set in the hash space. Then, in the zones between the hash values of two adjacent nodes, the hash values of segment IDs are assigned. For example, each node is assigned a master process for master data blocks included in a segment belonging to a zone between the node and its immediate successor node in the hash space.

As an example, it is assumed that hv() represents a hash function and "0" exists between v2 and v0. In this case, the master process for the master data blocks A and B included in the segment SG0 belonging to a zone v0≤hv(key)<v1 is handled by the node 100 (a segment ID is substituted for key. The same applies hereafter in FIG. 3). The master process for the master data block C included in the segment SG1 belonging to a zone v1≤hv(key)<v2 is handled by the node 200. The master process for the master data block D included in the segment SG2 belonging to a zone v2≤hv(key)<2^{L}-1 or 0≤hv(key)<h0 is handled by the node 300.

In this connection, the method of allocating backup data blocks to the nodes, which handle the backup process for the backup data blocks, is different from that of allocating master data blocks (this will be described later).

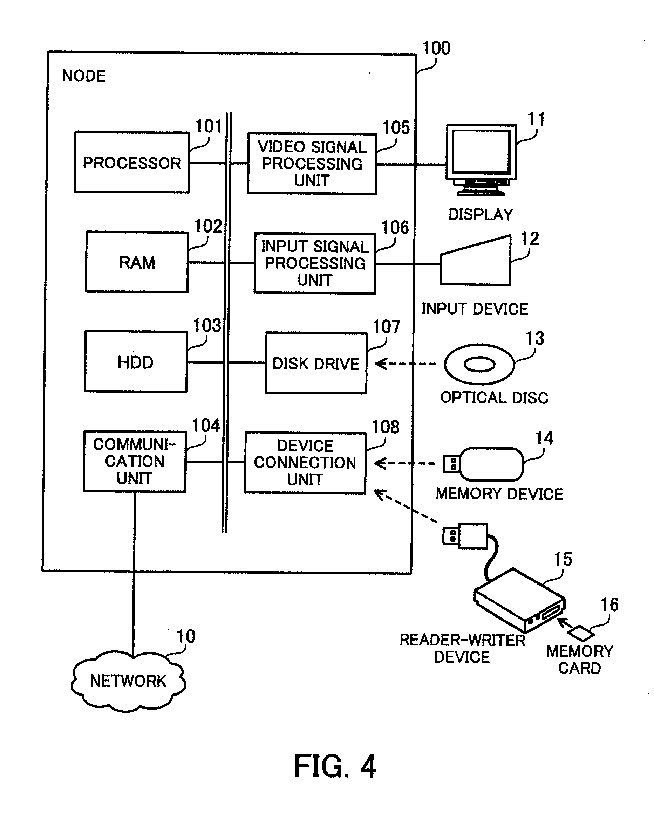

FIG. 4 illustrates an example of a hardware configuration of a node. The node 100 includes a processor 101, a RAM 102, an HDD 103, a communication unit 104, a video signal processing unit 105, an input signal processing unit 106, a disk drive 107, and a device connection unit 108. Each unit is connected to a bus of the node 100.

The processor 101 controls the information processing that is performed in the node 100. The processor 101 may be, for example, a CPU or a Digital Signal Processor (DSP), or an application-specific electronic circuit, such as an ASIC, Field Programmable Gate Array (FPGA), etc. The "processor" may be a set of multiple processors (multiprocessor).

The RAM 102 is a primary storage device of the node 100. The RAM 102 temporarily stores at last part of Operating System (OS) programs and application programs to be executed by the processor 101. The RAM 102 also stores various types of data to be used in processing performed by the processor 101.

The HDD 103 is a secondary storage device of the node 100. The HDD 103 magnetically writes and reads data on a built-in magnetic disk. The HDD 103 stores the OS programs, application programs, and various types of data. The node 100 may be provided with another type of secondary storage device, such as a flash memory, Solid State Drive (SSD), etc., or with a plurality of secondary storage devices.

The communication unit 104 is a communication interface that performs communication with other computers over the network 10. The communication unit 104 may be either a wired interface or a wireless interface.

The video signal processing unit 105 outputs images to a display 11 connected to the node 100 in accordance with instructions from the processor 101. As the display 11, a Cathode Ray Tube (CRT) display, a liquid crystal display, or another may be used.

The input signal processing unit 106 receives an input signal from an input device 12 connected to the node 100 and outputs the input signal to the processor 101. As the input device 12, for example, a pointing device, such as a mouse, a touch panel, etc., a keyboard, or another may be used.

The disk drive 107 is a driving device that reads programs and data from an optical disc 13 with laser beams or the like. As the optical disc 13, for example, a Digital Versatile Disc (DVD), a DVD-RAM, a Compact Disc Read Only Memory (CD-ROM), a CD-R (recordable), a CD-RW (ReWritable), or another may be used. For example, the disk drive 107 reads programs and data from the optical disc 13 and stores them in the RAM 102 or the HDD 103 in accordance with instructions from the processor 101.

The device connection unit 108 is a communication interface that allows peripherals to be connected to the node 100. For example, a memory device 14 and a reader-writer device 15 are connected to the device connection unit 108. The memory device 14 is a recording medium provided with a function of communicating with the device connection unit 108. The reader-writer device 15 reads and writes data on a memory card 16, which is a card-type recording medium. For example, the device connection unit 108 stores programs and data read from the memory device 14 or the memory card 16 in the RAM 102 or the HDD 103 in accordance with instructions from the processor 101.

In this connection, the node 100 may be configured without the disk drive 107 or the device connection unit 108. In the case where a user is able to operate the node 100 from another device, such as the client 21, the node 100 may be configured without the video signal processing unit 105 or the input signal processing unit 106. In addition, the display 11 and the input device 12 may integrally be formed with the case of the node 100 or may be connected to the node 100 wirelessly. The client 21 and the nodes 200 and 300 may be configured with the same unis as the node 100.

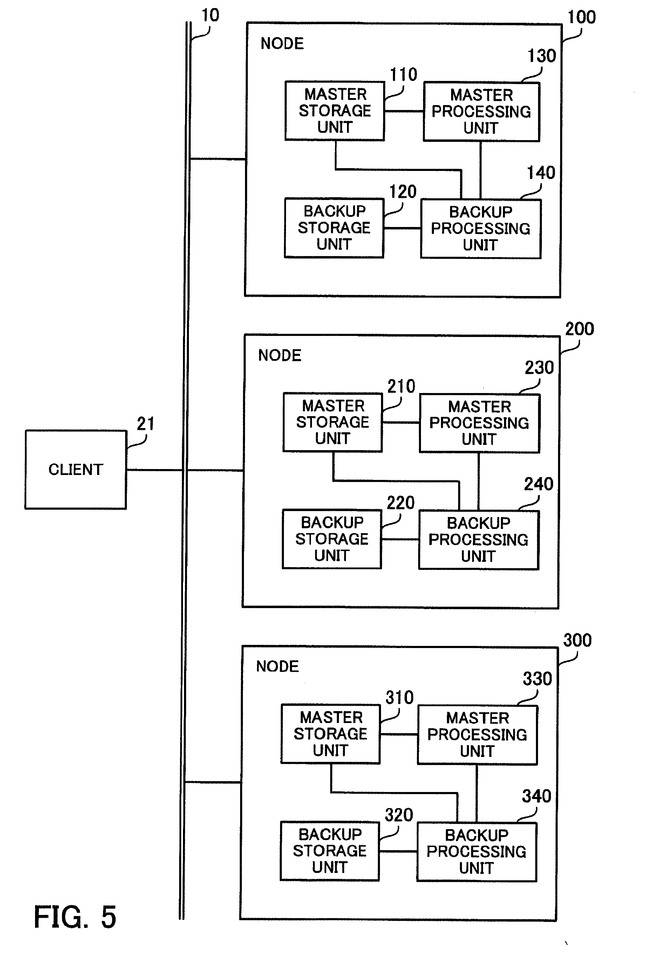

FIG. 5 illustrates an example of functions of a node. The node 100 includes a master storage unit 110, a backup storage unit 120, a master processing unit 130, and a backup processing unit 140.

The master storage unit 110 is a non-volatile storage area prepared in the HDD 103. The master storage unit 110 includes a storage area for storing master data blocks and a storage area for storing information used for managing the allocation of the master data blocks to the nodes (to which nodes master data blocks are allocated). The former storage area is divided into segments. The master storage unit 110 includes a segment SG0 as a storage area for master data blocks, as described earlier.

The information used for managing the allocation of master data blocks to nodes includes a segment management table and a segment handling table. The segment management table contains information indicating to which segments master data blocks belong. The segment handling table contains information indicating a correspondence between a segment ID and a handling node. With reference to both the segment management table and the segment handling table, it is possible to detect a master data block and a master node that handles a master process for the master data block. Therefore, it may be said that the segment management table and the segment handling table are an example of the management information of the first embodiment.

The backup storage unit 120 is a non-volatile storage area prepared in the HDD 103. The backup storage unit 120 includes a storage area for storing backup data blocks and a storage area for storing information used for managing the allocation of the backup data blocks to the nodes. The allocation of a backup data block to a node is determined based on the hash value of the data name (key) of the backup data block. This is different from the allocation of a master data block to a node, which is determined based on the hash value of the segment ID of the segment to which the master data block belongs. That is to say, the master data blocks and the backup data blocks are allocated to the nodes in different ways. Therefore, there is a possibility that a backup data block corresponding to a master data block stored in the master storage unit 110 is stored in the backup storage unit 120.

The master processing unit 130 receives, as an access request from the client 21, an instruction to manipulate a data block, directly from the client 21 or via another node over the network 10. Data manipulation instructions include a read instruction specifying a data name and a write instruction specifying a data name and a value. The master processing unit 130 obtains the segment ID corresponding to the data name specified by the data manipulation instruction with reference to the segment management table stored in the master storage unit 110. The master processing unit 130 then calculates the hash value of the segment ID, and searches the segment handling table stored in the master storage unit 110 to find a master node that needs to execute the data manipulation instruction. If the found master node is another node, the master processing unit 130 transfers the data manipulation instruction to the found master node.

If the found master node is the node 100, the master processing unit 130 executes the data manipulation instruction, and sends a response message indicating the execution result to the client 21. More specifically, in the case where the data manipulation instruction is a read instruction, the master processing unit 130 reads the master data block identified by the specified data name from the master storage unit 110, and sends the read master data block to the client 21. In the case where the data manipulation instruction is a write instruction, on the other hand, the master processing unit 130 selects a segment to which the specified data block belongs in the master storage unit 110 (or allocates a new segment), and writes the data block in association with the data name in the selected segment.

The master processing unit 130 may change the allocation of master data blocks to segments (in this case, update the segment management table) according to an access pattern to a plurality of master data blocks from the client 21. For example, the master processing unit 130 allocates a predetermined number (two in the second embodiment) of master data blocks that are likely to be accessed sequentially, to the same segment. The master processing unit 130 prefetches data blocks to a cache (not illustrated) on a segment basis, so as to thereby improve the cache hit rate for access requests from the client 21. The cache is a storage area prepared for the master storage unit 110 in the RAM. Using the cache speeds up access to master data blocks.

The backup processing unit 140 reflects updates made on the master data blocks in the backup data blocks stored in the backup storage unit 120. For example, consider the case where the backup data block corresponding to a master data block stored in the master storage unit 110 is stored in the backup storage unit 120. In this case, the backup processing unit 140 obtains the details of an update made on the master data block by the master processing unit 130, from the master processing unit 130. The backup processing unit 140 then searches the backup storage unit 120 for the backup data block corresponding to the master data block, and reflects the update in the found backup data block on the basis of the obtained update details.

In addition, for example, consider the case where a backup data block corresponding to a master data block stored in another node is stored in the backup storage unit 120. In this case, the backup processing unit 140 obtains the details of an update made on the master data block by the other node, from the other node. The backup processing unit 140 then searches the backup storage unit 120 for the backup data block corresponding to the master data block, and reflects the update in the found backup data block on the basis of the obtained update details.

When a new master data block is written in the master storage unit 110, the backup processing unit 140 makes a copy of the master data block as a backup data block. In addition, the backup processing unit 140 calculates the hash value of the data name of the backup data block, and searches the backup handling table stored in the backup storage unit 120 to find a backup node that needs to manage the backup data block.

In the case where the found backup node is another node, the backup processing unit 140 sends the backup data block to the backup node. In the case where the found backup node is the node 100, on the other hand, the backup processing unit 140 writes the backup data block in association with the data name in the backup storage unit 120. As will be described later, two or more backup nodes are allocated for each master data block. One of backup nodes for a certain data block may also function as the master node that stores the data block. For example, in the case where the node 100 is the master node for a certain data block, the node 100 may also function as one of backup nodes for the data block. In this case, the node 100 holds both the master data block and the backup data block with respect to the data block.

The backup processing unit 140 communicates with the nodes 200 and 300 to monitor whether a failure has occurred in any of the nodes or not. More specifically, the backup processing unit 140 sends a prescribed packet for alive monitoring (for example, ping) to the nodes 200 and 300 and detects based on a response status if the nodes 200 and 300 are able to perform communication or not. For example, if a response packet arrives from a destination node, this destination node is recognized as being able to perform communication and therefore being in normal state. If no response packet arrives from the destination node, on the other hand, this destination node is recognized as being unable to perform communication and therefore being unavailable.

If there is a node (failed node) in which a failure has occurred, the backup processing unit 140 performs a process of restoring master data. More specifically, if the backup data block corresponding to a master data block is stored in the backup storage unit 120, the backup processing unit 140 restores the master data block in a normal node. A node in which the master data block is restored is a node that is determined to handle the master data block in place of the failed node. At this time, the backup processing unit 140 communicates with other nodes so that the backup data block corresponding to the master data block is allocated to at least two nodes in the information processing system.

The number of nodes to which the backup data block is allocated depends on the number of data copies desired by a user. In this second embodiment, the backup data block of a master data block may be allocated to the node that stores the master data block. Therefore, the backup data block is allocated to as many nodes as a value obtained by adding one to the number of data copies desired by the user. For example, the user is able to enter the desired number of data copies in the node 100 by operating the client 21 or the input device 12 at the time of starting the information processing system. The backup processing unit 140 determines to allocate a backup data block to as many nodes as a value obtained by adding one to the received number of data copies. If the number of data copies is one, for example, the backup processing unit 140 determines to allocate a backup data block to two nodes. The backup processing unit 140 notifies the nodes 200 and 300 of the determination result.

In this connection, the master processing unit 130 and the backup processing unit 140 may be implemented as program modules to be executed by the CPU 101. Some or all of the functions of these modules may be realized by using application-specific integrated circuits.

Further, the nodes 200 and 300 have the same modules as the node 100. The node 200 includes a master storage unit 210, a backup storage unit 220, a master processing unit 230, and a backup processing unit 240. The node 300 includes a master storage unit 310, a backup storage unit 320, a master processing unit 330, and a backup processing unit 340. Each of the modules has the same functions as the corresponding module with the same name as used in the node 100 and therefore will not be explained again.

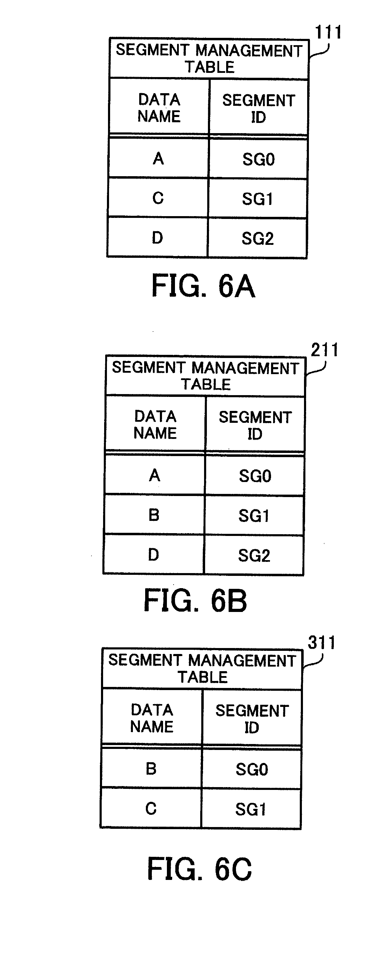

FIGS. 6A, 6B, and 6C illustrate an example of segment management tables. FIG. 6A illustrates an example of a segment management table 111, which is stored in the master storage unit 110. FIG. 6B illustrates an example of a segment management table 211, which is stored in the master storage unit 210. FIG. 6C illustrates an example of a segment management table 311, which is stored in the master storage unit 310. Each segment management table 111, 211, and 311 includes the following fields: data name and segment ID.

The data name field contains the data name of a master data block. The segment ID field contains a segment ID. For example, the segment management table 111 includes a record with a data name of "A" and a segment ID of "SG0". This record indicates that the master data block A belongs to the segment SG0.

As described earlier, each node 110, 200, and 300 may store part of correspondences between master data blocks and segments. When a node receives an access request to access a master data block that is not recorded in the segment management table of the own node, the node may make an inquiry to another node. For example, even when the node 100 receives an access request to access the master data block B, the node 100 makes an inquiry to the node 200 or node 300 about a segment corresponding to the master data block B because the master data block B is not registered in the segment management table 111, so as to thereby recognize the segment.

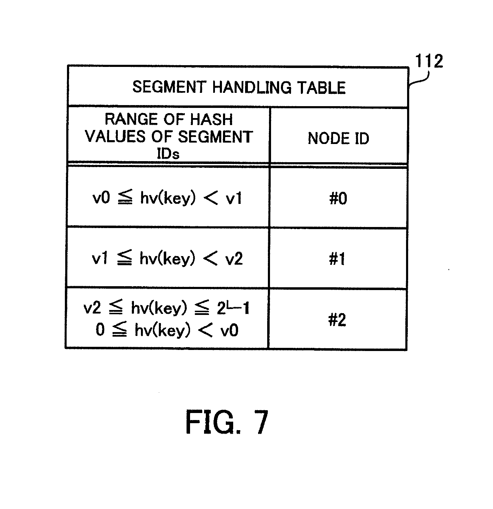

FIG. 7 illustrates an example of a segment handing table. The segment handling table 112 is stored in the master storage unit 110. The segment handling table 112 includes the following fields: range of hash values of segment IDs and node ID.

The field for the range of hash values of segment IDs contains a range of hash values of segment IDs by a hash function hv. The node ID field contains a node ID.

For example, the segment handling table 112 includes a record with a range of hash values of segment IDs of "v0≤hv(key)<v1" and a node ID of "#0". Here, a segment ID is substituted for "key". This record indicates that, as explained with reference to FIG. 3, the master process for master data blocks included in the segments belonging to a zone of v0≤hv(key)<v1 is handled by the node 100.

Correspondences between the other ranges of hash values and node IDs, registered in the segment handling table 112, are the same as those between the other ranges of hash values and node IDs which are explained with reference to FIG. 3. The same information as the segment handling table 112 is also stored in the master storage units 210 and 310.

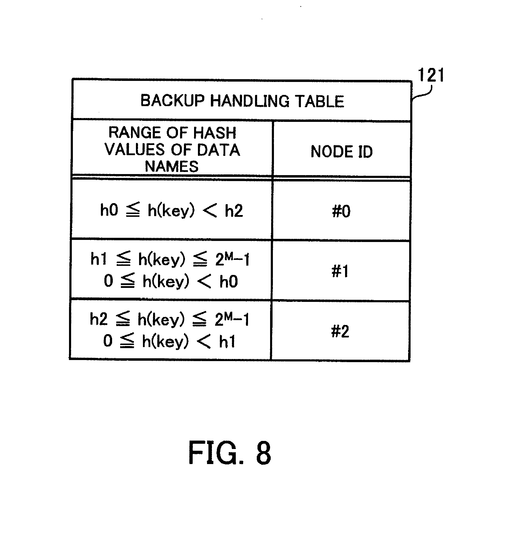

FIG. 8 illustrates an example of a backup handling table. The backup handling table 121 is stored in the backup storage unit 120. The backup handling table 121 includes the following fields: range of hash values of data names and node ID.

The field for the range of hash values of data names contains a range of hash values of data names of backup data blocks by a hash function h. In this connection, the data name of a backup data block may be the same as that of a corresponding master data block or may be a name generated by modifying the data name of the master data block according to a prescribed rule (for example, addition of a prescribed character string, or the like). The node ID field contains a node ID.

In this connection, backup nodes are determined with a method that does not depend on a method of determining a master node. To allocate backup data blocks to the nodes 100, 200, and 300, a hash space different from that exemplified in FIG. 3 is defined. The hash space to be used for determining backup nodes is defined by forming the range of hash values of the data names of backup data blocks in a ring. For example, in the case where a hash value is expressed in M bits, a hash space is defined such that the 2^{M}-1 (the largest hash value) wraps around to zero.

It is assumed that, in this hash space, the hash values corresponding to the nodes 100, 200, and 300 are h0, h1, and h2 (h0<h1<h2), respectively, and "0" exists between h2 and h0. Similarly to the case of the master data blocks, the hash value corresponding to a node is the hash value of an address, such as an IP address, of the node. The backup handling table 121 exemplifies the case of allocating a backup data block to two nodes.

For example, the backup handing table 121 includes a record with a range of hash values of data names of "h0≤h(key)<h2" and a node ID of "#0". The data name of a backup data block is substituted for the "key" of the hash function h(key). This record indicates that the backup process for backup data blocks belonging to a zone of "0≤h(key)<h2" is handled by the node 100.

Further, the backup handing table 121 includes a record with a range of hash values of data names of "h1≤h(key)<2^{M}-1, 0≤h(key)<h0" and a node ID of "#1". This record indicates that the backup process for backup data blocks belonging to a zone of "h1≤h(key)<2^{M}-1, 0≤h(key)<h0" is handled by the node 200.

Still further, the backup handing table 121 includes a record with a range of hash values of data names of "h2≤h(key)<2^{M}-1, 0≤h(key)<h1" and a node ID of "#2". This record indicates that the backup process for backup data blocks belonging to a zone of "h2≤h(key)<2^{M}-1, 0≤h(key)<h1" is handled by the node 300.

As described above, in the case where a backup data block is allocated to two nodes, each node handles the backup process for backup data blocks belonging to a zone between the node and its second successor node in the hash space. In this connection, the same information as the backup handling table 121 is also stored in the backup storage units 220 and 320.

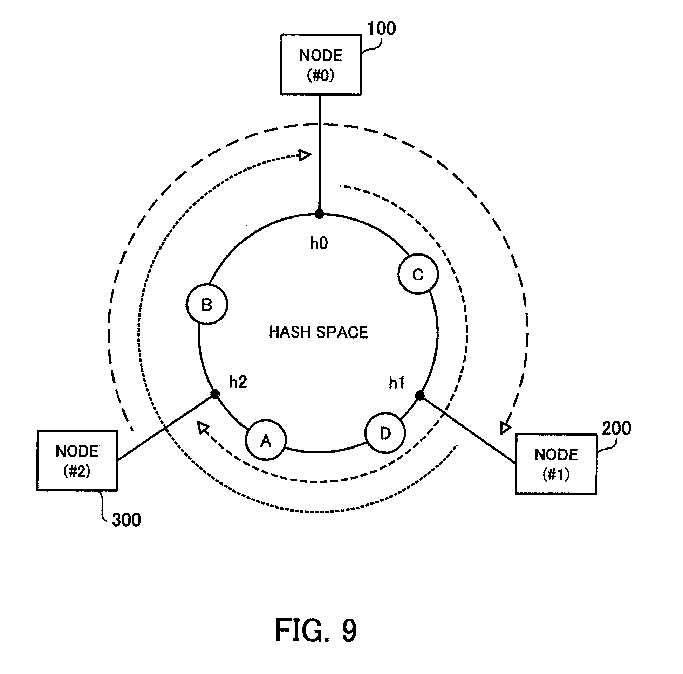

FIG. 9 illustrates an example of an allocation of backup data blocks. FIG. 9 illustrates how to assign backup nodes as indicated in the backup handling table 121. The backup process for the backup data blocks C, D, and A belonging to a zone of "h0≤h(key)<h2" is handled by the node 100 (in this connection, the data name of a backup data block is substituted for "key". The same applies hereinafter in FIG. 9). The backup process for the backup data blocks D, A, and B belonging to a zone of "h1≤h(key)<2^{M}-1, 0≤h(key)<h0" is handled by the node 200. The backup process for the backup data blocks B and C belonging to a zone of "h2≤h(key)<2^{M}-1, 0≤h(key)<h1" is handled by the node 300.

In this connection, the same function may be used as the hash function hv and the hash function h. In this case, h0=v0, h1=v1, and h2=v2.

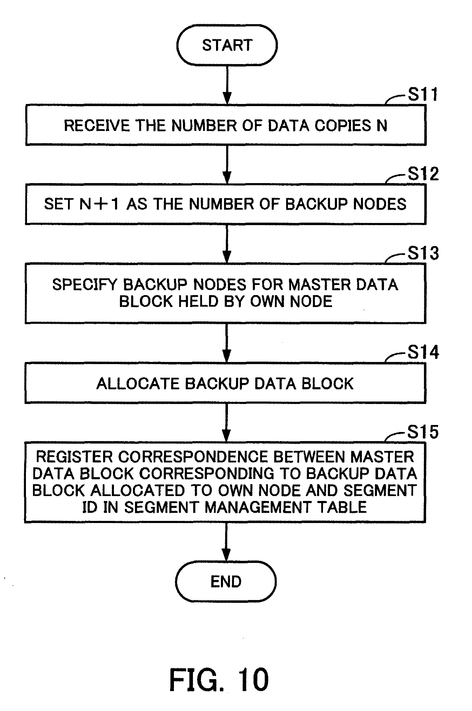

FIG. 10 is a flowchart illustrating an example of allocating backup data blocks. The process of FIG. 10 will be described step by step. The following example mainly describes how the node 100 performs the process. The nodes 200 and 300 are able to perform the same process. It is assumed that, immediately before execution of step S11, master data blocks have been allocated to the nodes 100, 200, and 300 but backup data blocks have not yet been allocated thereto.

(S11) The backup processing unit 140 receives the specification of the number of data copies N (N is an integer of 1 or greater) from the client 21. It may be said that the number of data copies N represents the upper limit on the number of nodes allowed to fail simultaneously (for keeping on operating the information processing system). For example, in the case of N=1, the fault tolerance is ensured so as not to lose any master data blocks against a failure in one node. For example, a user operates the client 21 (or the input device 12) to enter the number of data copies N to the node 100.

(S12) The backup processing unit 140 sets a value obtained by adding one to the specified number of data copies N, i.e., N+1, as the number of backup nodes. The backup processing unit 140 notifies the nodes 200 and 300 of the determined number of backup nodes. It is now assumed that N=1 is specified. In this case, the number of backup nodes for each master data block is two, and nodes for handing backup data blocks are determined with reference to the backup handling table 121.

(S13) The backup processing unit 140 determines the data name of the backup data block (in this connection, the backup data block is yet to be created at this time) from the data name of the master data block stored in the master storage unit 110. As described earlier, the data name of the backup data block may be the same as the master data block or a name generated by modifying the data name of the master data block according to a prescribed rule. The backup processing unit 140 calculates the hash value by substituting the data name of the backup data block in the hash function h(), and specifies two backup nodes for the master data block with reference to the backup handling table 121. In the above-described example, the nodes 100 and 200 are specified as two backup nodes for the master data block A. In this connection, the backup processing unit 140 executes step S13 for each of the master data blocks stored in the master storage unit 110.

(S14) The backup processing unit 140 allocates the backup data block corresponding to the master data block stored in the master storage unit 110 to the two backup nodes specified at step S13. In the above-described example, with respect to the master data block A, the backup data block of the master data block A is allocated to two nodes 100 and 200. As a result, the backup data block of the master data block A is stored in the backup storage units 120 and 220. The master data block B is processed in the same way. The backup processing unit 140 may receive a backup data block to be handled by the own node (node 100) from another node. In that case, the backup processing unit 140 stores the received backup data block in the backup storage unit 120.

(S15) The backup processing unit 140 registers a correspondence between the master data block corresponding to the backup data block allocated to the own node and a segment ID, in the segment management table 111.

As described above, the nodes 100, 200, and 300 allocate the backup data blocks. In this connection, at step S12, the backup processing units 140, 240, and 340 change the backup handling table according to the number of backup nodes. For example, in the case where a backup data block is allocated to three nodes (in the case of N=2), each node creates a backup handling table such as to handle the backup process for the backup data blocks belonging to a zone between the own node and its third successor node in the hash space. The same applies to the case of providing four or more nodes and allocating a backup data block to four or more nodes (N≥3).

The reason why backup nodes more than the number of data copies specified by the user are provided is as follows. In the case of determining a master node and a backup node with different methods that are independent of each other, there is a possibility that a master data block and its backup data block are allocated to the same node. By allocating the backup data block to nodes more than the number of data copies N specified by the user, it is possible to keep on operating the system even if a failure occurs in as many nodes as the specified number of data copies, thereby ensuring user-desired fault tolerance.

Further, the reason of "adding one" to the number of data copies N is to ensure user-desired fault tolerance with the minimum number of backup data blocks. This makes it possible to ensure the user-desired fault tolerance while saving a storage area for storing backup data blocks in each node, compared with the case of "adding a value of two" or greater to the number of data copies N. However, a value obtained by adding a value of two or greater to the number of data copies N may be set as the number of backup nodes.

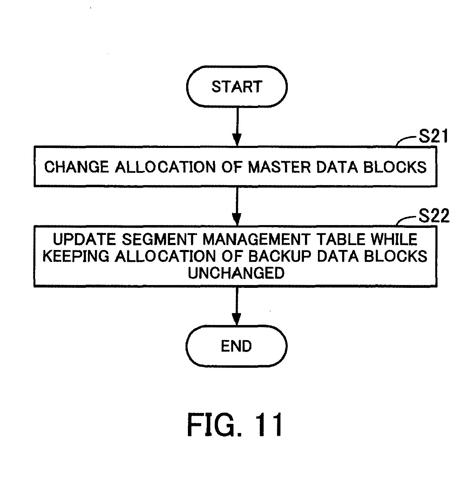

FIG. 11 is a flowchart illustrating an example of changing the allocation of master data blocks. The process of FIG. 11 will be described step by step. The following example mainly describes how the node 100 performs the process. The nodes 200 and 300 are able to perform the same process.

(S21) The master processing unit 130 shares the access pattern to each master data block on the nodes (an access history of each master data block) with the other nodes. The master processing unit 130 allocates master data blocks that are determined to have been accessed sequentially with a high frequency on the basis of the access pattern, to the same segment. For example, to the segment SG0 of the node 100, a master data block that has belonged to another segment may newly be allocated. In this case, the master processing unit 130 receives the master data block from the other node, and stores the master data block in the segment SG0 of the master storage unit 110. In addition, a master data block that has belonged to the segment SG0 may be allocated to another segment. In this case, the master processing unit 130 sends the master data block to the other node.

(S22) The master processing unit 130 updates the segment management table 111 according to the changes made at step S21. Even in the case where there was no change to the allocation of the master data blocks belonging to the segment SG0, the segment management table 111 is updated if the allocation of the master data blocks corresponding to the backup data blocks stored in the backup storage unit 120 is changed. Even if there is a change to the allocation of master data blocks by the master processing unit 130, the backup processing unit 140 does not change the allocation of the backup data blocks. That is to say, at normal time, the allocation of backup data blocks in each node is kept unchanged.

In this connection, the master processing unit 130 is able to initiate step S21 at any time. For example, the time after the access pattern to each master data block is obtained for a predetermined period of time may be taken as such a time.

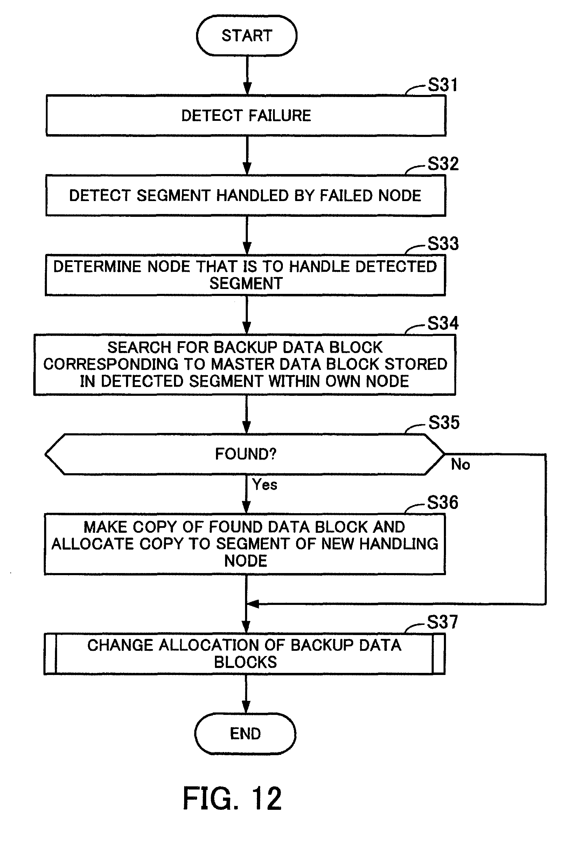

FIG. 12 is a flowchart illustrating an example of a process to be performed at the time of failure. The process of FIG. 12 will be described step by step. The following example mainly describes how the node 100 performs the process. The nodes 200 and 300 are able to perform the same process. In addition, as an example, it is assumed that a failure occurs in the node 300. The same process is performed when a failure occurs in another node.

(S31) The backup processing unit 140 detects that the node 300 is unavailable due to a failure. For example, by transmitting and receiving a packet for alive monitoring with the nodes 200 and 300, the backup processing unit 140 is able to detect if a failure has occurred in the nodes 200 and 300 or not.

(S32) The backup processing unit 140 detects the segments handled by the node 300 with reference to the segment handling table 112. More specifically, the backup processing unit 140 calculates the hash value of each of all segment IDs used in the nodes 100, 200, and 300 with the function hv(), and detects the segment SG2 handled by the node 300 with reference to the segment handling table 112. In this connection, all of the segment IDs used in the nodes 100, 200, and 300 are previously stored in each node.

(S33) The backup processing unit 140 determines a node for handling the segment SG2 detected at step S32 (this node becomes a master node for the master data blocks belonging to the segment SG2). More specifically, in the hash space of FIG. 3, the backup processing unit 140 causes a node existing in the zone immediately previous to that of the failed node to handle the zone of the failed node (changes the range of hash values in the segment handling table 112). Because of the failure in the node 300, the node 200 is to handle the segment SG2, which has been handled by the node 300. That is to say, the node 200 is to handle the master process for the master data blocks belonging to the segment SG2.

(S34) The backup processing unit 140 searches the backup data blocks stored in the backup storage unit 120 to find the backup data blocks corresponding to the maser data blocks belonging to the segment SG2 detected at step S32, with reference to the segment management table 111.

(S35) The backup processing unit 140 determines whether any backup data block has been found or not, as a result of the search at step S34. If a backup data block has been found, the process proceeds to step S36. If no backup data block has been found, the process proceeds to step S37.

(S36) The backup processing unit 140 makes a copy of the found backup data block, and allocates the copy to the segment SG2 of the node 200 determined at step S33. As a result, the master data block has been restored in the segment SG2 of the node 200.

(S37) The backup processing unit 140 changes the allocation of backup data blocks in collaboration with the other nodes. More specifically, the backup processing unit 140 changes the allocation of backup data blocks such that there are two or more backup nodes (in this example, the number of data copies N+1 = 1+1 = 2) for each master data block within the information processing system.

In this connection, at steps S34 and S35, the same backup data block may be found by a plurality of nodes. For example, in the case where a failure occurs in the node 300, the backup data block is found by the nodes 100 and 200 if the backup data block corresponding to each master data belonging to the segment SG2 of the node 300 is stored in both the nodes 100 and 200. In this case, both the nodes 100 and 200 restore the master data block in the segment SG2 of the node 200 (overwriting may be done).

Alternatively, any one of the nodes may restore the master data block because overlapped restoration is redundant. In the case where the node 200 is a new handling node, the node 200 may be caused to restore the master data block. This is because the communication between the nodes 100 and 200 is reduced as compared with the case where the node 100 restores the master data. Alternatively, a node with a smaller (or larger) node ID may be caused to restore the master data block.

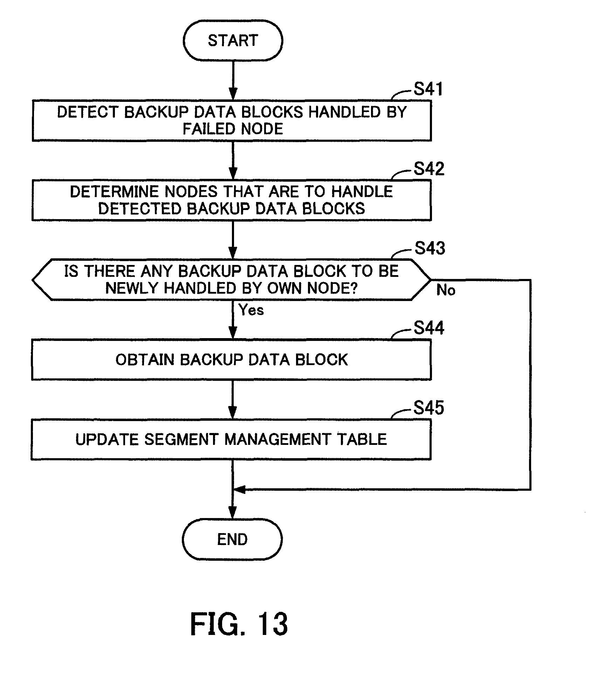

FIG. 13 is a flowchart illustrating an example of changing the allocation of backup data blocks. The process of FIG. 13 will be described step by step. The process of FIG. 13 corresponds to step S37. The following mainly describes how the node 100 performs the process. The other nodes 200 and 300 are able to perform the same process. In addition, the following describes the case where a failure has occurred in the node 300, as in FIG. 12, but the same applies to the case where a failure occurs in another node.

(S41) The backup processing unit 140 detects backup data blocks handled by the failed node 300 with reference to the backup handling table 121. More specifically, the backup processing unit 140 calculates the hash value of the data name of each of all the backup data blocks stored in the nodes 100, 200, and 300, with the function h(), and detects the backup data blocks that have been handled by the node 300 with reference to the backup handling table 121. In this connection, the data names of all the backup data blocks stored in the nodes 100, 200, and 300 are previously stored in each node. Alternatively, the backup processing unit 140 may communicate with the node 200 to detect the backup data blocks that do not exist in either the node 100 or the node 200, as the backup data blocks that have been handled by the node 300.

(S42) The backup processing unit 140 determines a node that is to handle the backup process for each backup data block detected at step S41. More specifically, the backup processing unit 140 updates the backup handling table 121 such that the backup data block for each master data block is allocated to both (two) the nodes 100 and 200. This is to keep two backup nodes for each master data block. In the example of FIG. 9, the backup processing unit 140 combines the first half of the zone handled by the node 300 to the zone handled by the node 100, and combines the second half of the zone handled by the node 300 to the zone handled by the node 200. As a result, the number of backup nodes, i.e., two, for each master data block is ensured.

(S43) The backup processing unit 140 determines with reference to the updated backup handling table 121 whether or not there is any backup data block that is newly to be handled by the own node (node 100) in the backup data blocks detected at step S41. If there is, the process proceeds to step S44. If there is not, the process is completed.

(S44) The backup processing unit 140 obtains the backup data block that is newly to be handled by the own node. For example, the backup processing unit 140 obtains the backup data block from another node. Alternatively, in the case where the master data block corresponding to the backup data block is stored in the master storage unit 110, the backup processing unit 140 may make a copy of the master data block as the backup data block. The backup processing unit 140 stores the obtained backup data block in the backup storage unit 120.

(S45) The backup processing unit 140 updates the segment management table 111. More specifically, with respect to the master data block corresponding to the backup data block obtained from the other node, the backup processing unit 140 registers a correspondence between the master data block and a segment in the segment management table 111. In this connection, if the backup processing unit 140 fails to confirm a correspondence between the master data block and the segment by itself, the backup processing unit 140 may make an inquiry to another node.

As described above, when a failure occurs in any node, each node changes the allocation of backup data blocks. At this time, addition of one to the number of data copies, i.e., N+1, (in the second embodiment, N+1=2) is maintained (two backup nodes are prepared for each master data block). In addition, according to the change to the allocation of the backup data blocks, each node registers correspondences between the master data blocks corresponding to the backup data blocks held by the own node and segments in the segment management table 111.

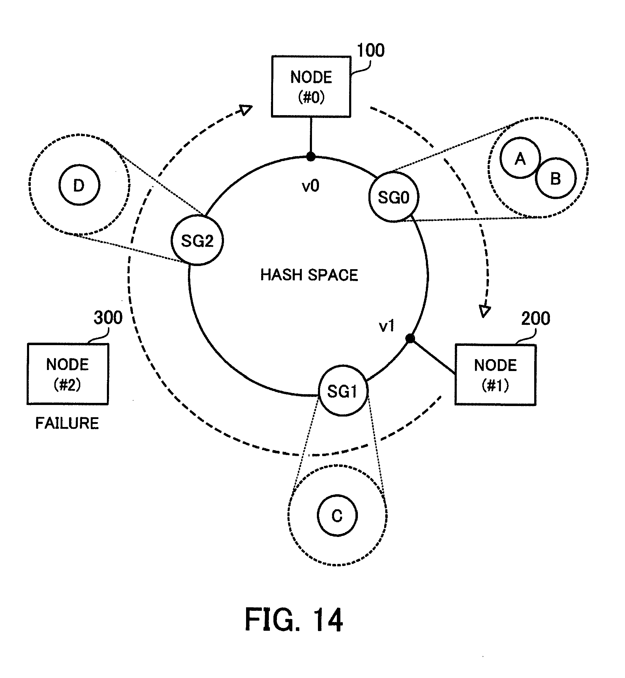

FIG. 14 illustrates an example of the allocation of master data blocks at the time of failure. In FIG. 14, it is assumed that a failure occurs in the node 300. As described in step S33 of FIG. 12, when a failure occurs in the node 300, a zone handled by the node 300 in the hash space (for segments) is combined to the zone handled by the node 200. As a result, the zone handled by the node 200 is now v1≤hv(key)≤2^{L}-1 and 0≤hv(key)<v0. Referring to the example of FIG. 14, the node 200 is a master node for the master data blocks C and D. The change of the zone handled is reflected in the segment handling table held by each node. In this connection, referring to the example of FIG. 14, there is no change to the zone handled by the node 100.

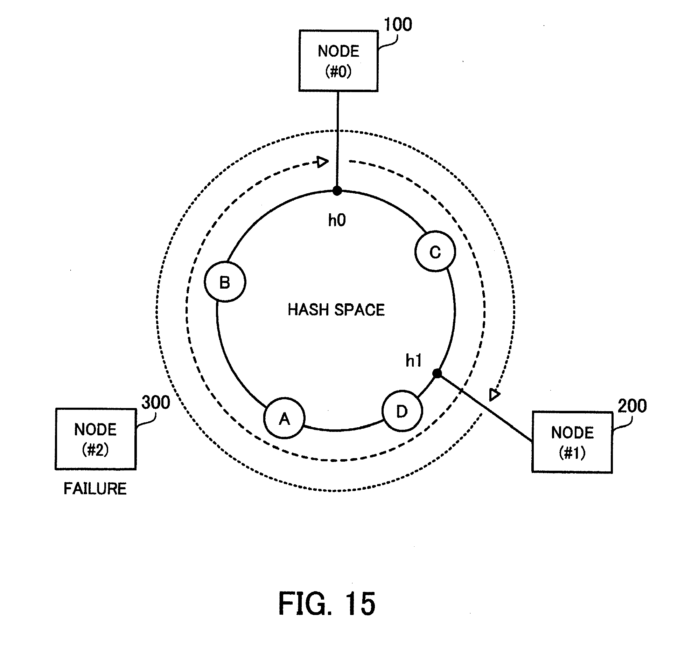

FIG. 15 illustrates an example of the allocation of backup data blocks at the time of failure. In FIG. 15, it is assumed that a failure occurs in the node 300. As described in step S42 of FIG. 13, when a failure occurs in the node 300, the first half of the zone handled by the node 300 in the hash space (for backup data blocks) is combined to the zone handled by the node 100. As a result, the zone handled by the node 100 is now h0≤hv(key)≤2^{M}-1 and 0≤hv(key)<h0. In addition, the second half of the zone handled by the node 300 is combined to the zone handled by the node 200. As a result, the zone handled by the node 200 is now h1<hv(key)≤2^{M}-1 and 0≤hv(key)<h1. This zone is the same as the changed zone of the node 100. The change of the zones handled is reflected in the backup handling table held by each node.

The following describes a specific example of the data allocation method of the second embodiment using exemplary processes performed by the nodes 100, 200, and 300. It is assumed that the segment management tables 111, 211, and 311 and the segment handling table 112 indicate the initial allocation of master data blocks to the nodes and the backup handling table 121 indicates the initial allocation of backup data blocks to the nodes. In addition, to distinguish backup data blocks, each backup data block is given reference numeral including a number, like backup data blocks A1 and A2 for the master data block A.

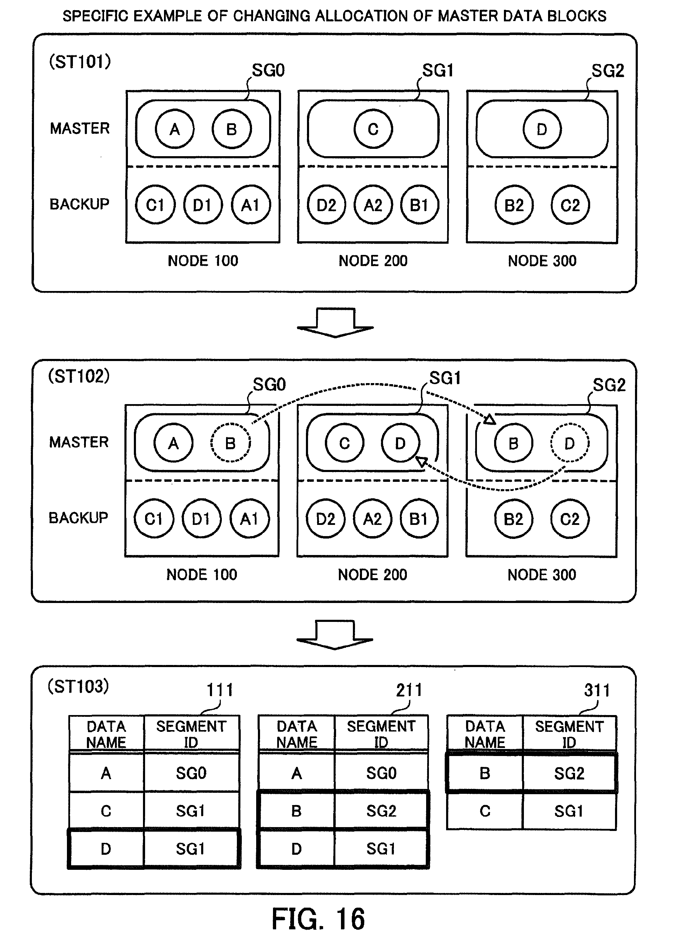

FIG. 16 illustrates a specific example of changing the allocation of master data blocks. The process of FIG. 16 will be described step by step.

(ST101) The master data blocks A and B are allocated to the segment SG0 of the node 100. The backup data blocks C1, D1, and A1 are allocated to the node 100. The master data block C is allocated to the segment SG1 of the node 200. The backup data blocks D2, A2, and B1 are allocated to the node 200. The master data block D is allocated to the segment SG2 of the node 300. The backup data blocks B2 and C2 are allocated to the node 300.

(ST102) The nodes 100, 200, and 300 change the allocation of the master data blocks stored in the segments SG0, SG1, and SG2 according to a change to the access pattern to the master data blocks A, B, C, and D. For example, since the possibility that the master data blocks B and D are to be accessed sequentially increases, the master data block B is relocated to the segment SG2. Then, since the possibility that the master data blocks C and D are to be accessed sequentially increases, the master data block D is relocated to the segment SG1. Even when the allocation of the master data blocks is changed, the allocation of the backup data blocks is kept unchanged.

(ST103) The nodes 100, 200, and 300 change the segment management tables 111, 211, and 311 according to the change to the allocation of the master data blocks. More specifically, the node 100 changes the segment ID with respect to the master data block D to "SG1" in the segment management table 111. The node 200 changes the segment ID with respect to the master data block B to "SG2" in the segment management table 211. Then, the node 200 changes the segment ID with respect to the master data block D to "SG1" in the segment management table 211. The node 300 changes the segment ID with respect to the master data block B to "SG2" in the segment management table 311.

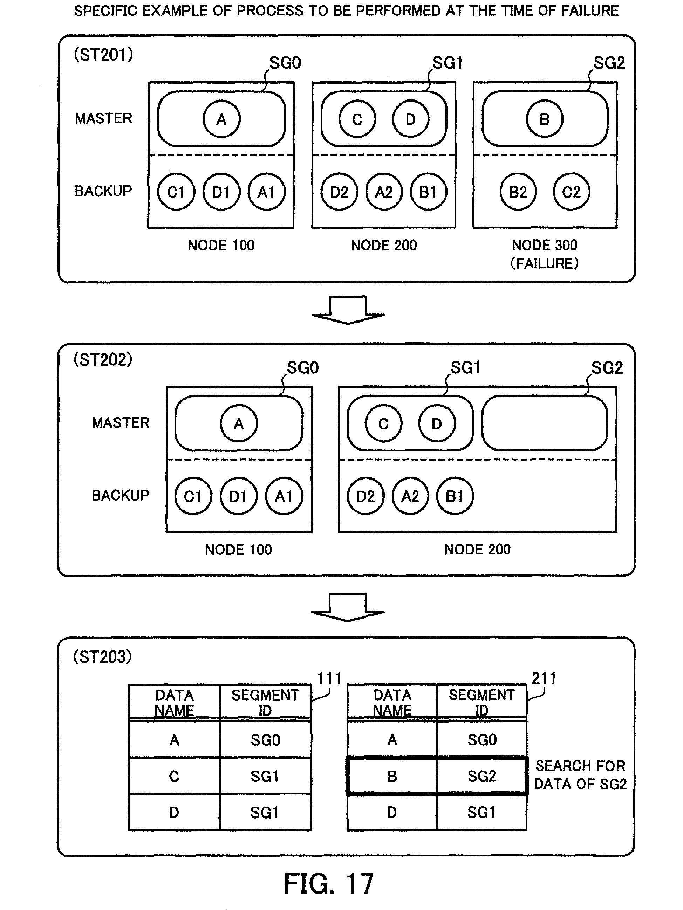

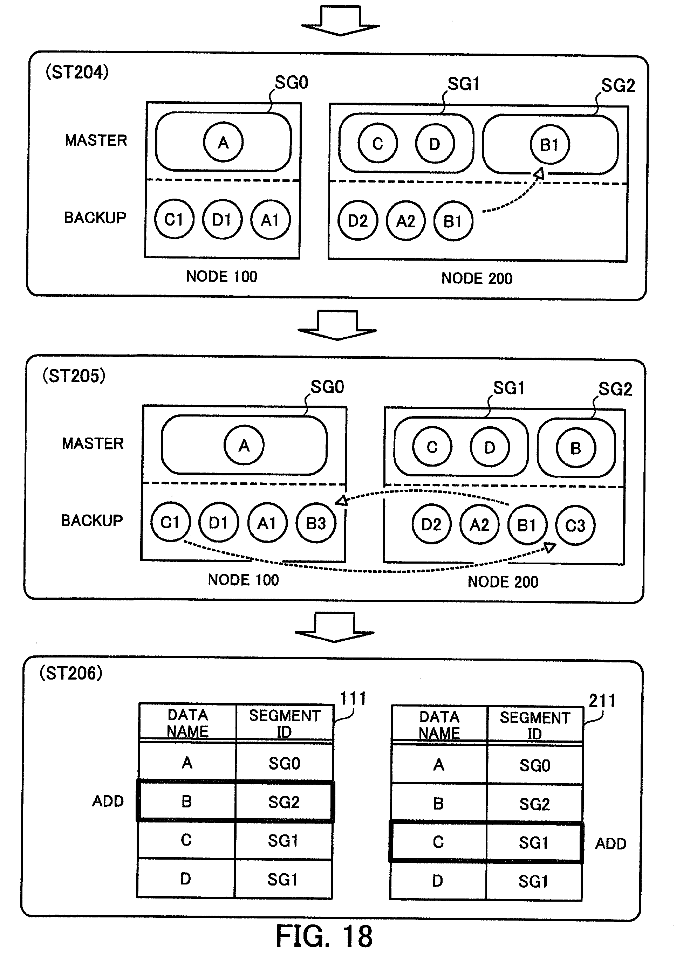

FIGS. 17 and 18 illustrate a specific example of a process to be performed at the time of failure. Hereinafter, the process of FIGS. 17 and 18 will be described step by step. In FIGS. 17 and 18, it is assumed that the initial allocation of master data blocks is the allocation obtained by changing the allocation of master data blocks as described with reference to FIG. 16.

(ST201) The nodes 100 and 200 detect that the node 300 is unavailable due to a failure. The nodes 100 and 200 detect that the node 300 has the segment SG2.

(ST202) The nodes 100 and 200 determine that the node 200 is to handle the segment SG2 in place of the node 300.

(ST203) The node 100 searches the backup data blocks C1, D1, and A1 stored in the backup storage unit 120 to find a backup data block corresponding to the master data block belonging to the segment SG2, with reference to the segment management table 111. Since there is no entry for the master data block corresponding to the segment SG2 in the segment management table 111, the search results in finding no backup data block. The node 200 searches the backup data blocks D2, A2, and B1 stored in the backup storage unit 220 to find a backup data block corresponding to the master data block belonging to the segment SG2, with reference to the segment management table 211. Since there is an entry for the master data block B belonging to the segment SG2 in the segment management table 211, the search results in finding the backup data block B1.

Now move on to FIG. 18.

(ST204) The node 200 copies the backup data block B1 stored in the backup storage unit 220 to a storage area corresponding to the segment SG2 in the master storage unit 210.

(ST205) The nodes 100 and 200 update their backup handling tables, as exemplified in FIG. 15. The updated backup handling tables indicate that the node 100 holds the backup data blocks for all the master data blocks A, B, C, and D, and similarly, the node 200 holds the backup data blocks for all the master data blocks A, B, C, and D.

The node 100 does not have a backup data block for the master data block B. Therefore, the node 100 obtains a backup data block B3 from the node 200 and stores it in the backup storage unit 120. The node 200 does not have a backup data block for the master data block C. Therefore, the node 200 obtains a backup data block C3 from the node 100 and stores it in the backup storage unit 220. In this connection, since the master data block C is stored in the segment SG1 of the node 200, the node 200 may not obtain the backup data block C3 from the node 100, but may make a copy of the master data block C as the backup data block C3 and store the backup data block C3 in the backup storage unit 220.

(ST206) The node 100 adds an entry indicating a correspondence between the master data block B and the segment SG2 in the segment management table 111 because the node 100 newly holds the backup data block B3. If the node 100 fails to confirm the segment ID corresponding to the master data block B by itself, the node 100 may make an inquiry to, for example, the node 200 to confirm the segment ID. In addition, the node 200 adds an entry indicating a correspondence between the master data block C and the segment SG1 in the segment management table 211 because the node 200 newly holds the backup data block C3.

The following describes the cases of not employing the data allocation method of the second embodiment as comparative examples.

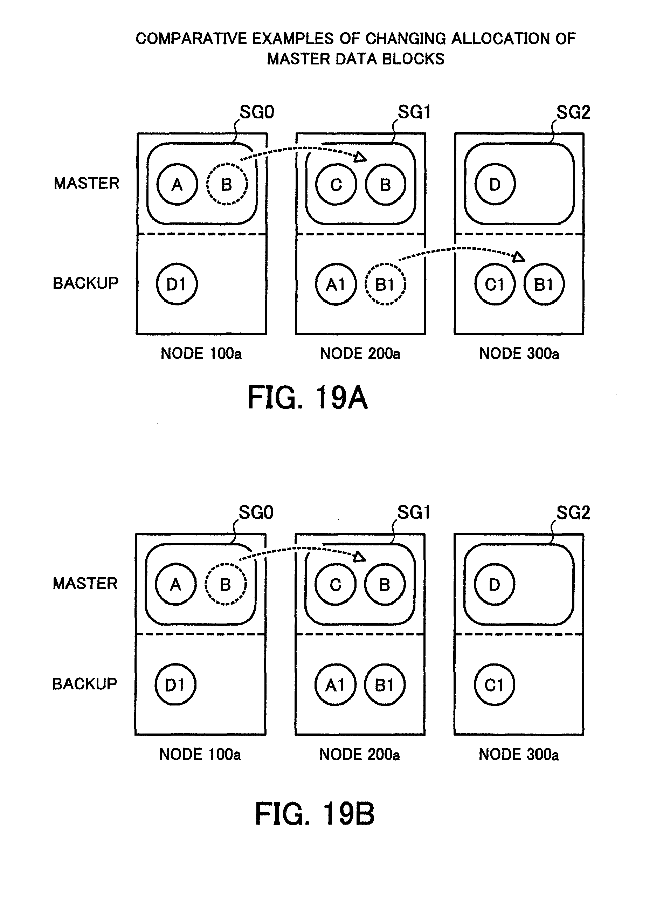

FIGS. 19A and 19B illustrate comparative examples of changing the allocation of master data blocks. FIGS. 19A and 19B exemplify nodes 100a, 200a, and 300a. The nodes 100a, 200a, and 300a are implemented by using computers, for example, and are connected to a network so as to perform communication with each other (not illustrated). The node 100a has a segment SG0. The node 200a has a segment SG1, and the node 300a has a segment SG2.

FIGS. 19A and 19B use the following initial allocation of data blocks. The segment SG0 includes master data blocks A and B. The segment SG1 includes master data block C. The segment SG2 includes master data block D.

FIG. 19A illustrates an example of changing the allocation of backup data blocks according to a change made to the allocation of master data blocks. In the example of FIG. 19A, the following method is adopted to determine master nodes and backup nodes. It is now assumed that, in the hash space exemplified in FIG. 3, the hash values of the nodes 100, 200, and 300 are used as the hash values of the nodes 100a, 200a, and 300a, respectively. In the same way as described with reference to FIG. 3, master nodes for holding the master data blocks A, B, C, and D are determined.

In addition, each node functions as a backup node for the master data blocks included in the segments belonging to the zone handled by the node existing in the zone immediately previous to that handled by the own node in the hash space. That is to say, the node 100a holds a backup data block D1. The node 200a holds backup data blocks A1 and B1. The node 300a holds a backup data block C1.

In FIG. 19A, consider the case of relocating the master data block B from the segment SG0 to the segment SG1. According to the method of determining backup nodes, used in FIG. 19A, the node 300a functions as a backup node for the master data block B. Therefore, the backup data block B1 is relocated from the node 200a to the node 300a.

In the method of FIG. 19A, backup data blocks are relocated according to the relocation of master data blocks. This relocation of backup data blocks imposes load on each node. This load increases as the frequency of relocating a master data block increases. In addition, if there are more copies made as backup data blocks, more relocation is needed for the copies, thus imposing more load on each node.

By contrast, the nodes 100, 200, and 300 of the second embodiment do not relocate backup data blocks even when a master data block is relocated between the nodes. Therefore, as compared with the case of FIG. 19A where backup data blocks are relocated according to the relocation of master data blocks, the load imposed on each node due to relocation of the master data blocks is reduced.

On the other hand, as illustrated in FIG. 19B, at the time of relocating the master data block B from the segment SG0 to the segment SG1, the backup data block B1 may be located in the node 200a. In this case, if the node 200a becomes unavailable due to a failure, it may be difficult to restore the master data block B.

To deal with this case, in the second embodiment, at least two of the nodes 100, 200, and 300 function as backup nodes for each master data block. Even if a master data block and its corresponding backup data block are allocated to the same node and a failure occurs in the node, there is at least another node that holds the backup data block corresponding to the master data block. Therefore, it is possible to restore the master data block handled by the failed node using the backup data block stored in the other node.

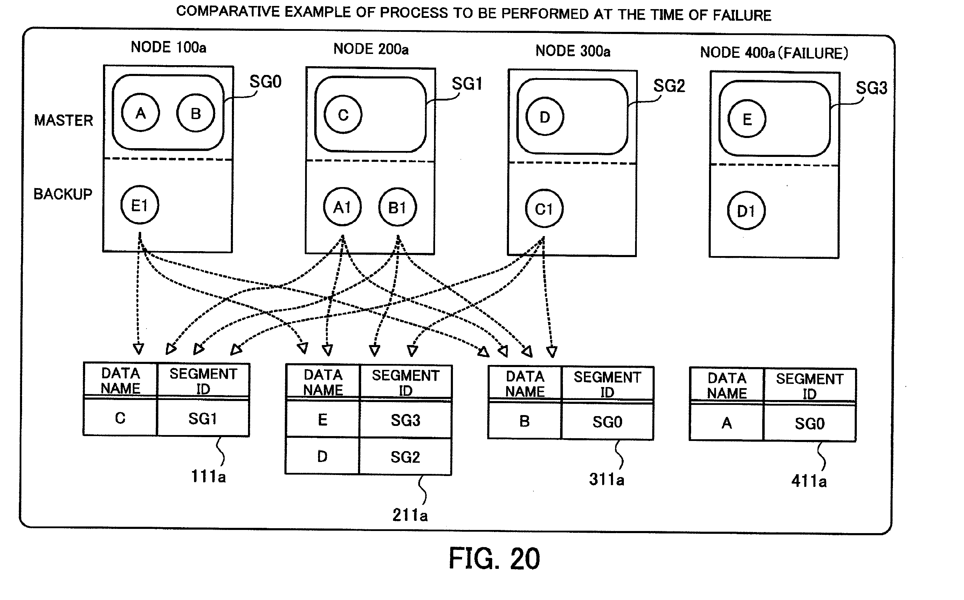

FIG. 20 illustrates a comparative example of a process to be performed at the time of failure. FIG. 20 exemplifies a node 400a in addition to the nodes 100a, 200a, and 300a illustrated in FIGS. 19A and 19B. The node 100a, 200a, 300a, 400a have segments SG0, SG1, SG2, and SG3, respectively. In FIG. 20, master data blocks A, B, C, D, and E are allocated to the nodes. More specifically, the segment SG0 includes the master data blocks A and B. The segment SG1 includes the master data block C. The segment SG2 includes the master data block D. The segment SG3 includes the master data block E.

In addition, in FIG. 20, backup nodes for each master data block are determined with the method exemplified in FIG. 19A. More specifically, the node 100a holds the backup data block E1. The node 200a holds the backup data blocks A1 and B1. The node 300a holds the backup data block C1. The node 400a holds the backup data block D1.

In this case, consider the case where information (segment management table) indicating correspondences between data blocks and segment IDs is held by the nodes in a distributed way. If the contents of the segment management table are randomly distributed among the nodes, the contents of the segment management table held by a node may become unavailable due to a failure or another problem. If this happens, the amount of communication between the nodes may increase to restore a master data block stored in the failed node using the corresponding backup data block.

For example, the node 100a includes a segment management table 111a in which a correspondence between the master data block C and the segment SG1 is registered. The node 200a includes a segment management table 211a in which a correspondence between the master data block E and the segment SG3 and a correspondence between the master data block D and the segment SG2 are registered.

The node 300a includes a segment management table 311a in which a correspondence between the master data block B and the segment SG0 is registered. The node 400a includes a segment management table 411a in which a correspondence between the master data block A and the segment SG0 is registered.

For example, if the node 400a becomes unavailable due to a failure in this situation, each node confirms whether each backup data block held by the own node corresponds to any master data block belonging to the segment SG3 of the node 400a or not. For example, the node 100a makes an inquiry to the nodes 200a and 300a as to which segment the master data block E corresponding to the backup data block E1 belongs to. The node 200a makes an inquiry to the nodes 100a and 300a as to which segment each of the master data blocks A and B corresponding to the backup data blocks A1 and B1 belongs to. The node 300a makes an inquiry to the nodes 100a and 200a as to which segment the master data block C corresponding to the backup data block C1 belongs to.

In this case, the node 100a confirms based on a response from the node 200a that the master data block E belongs to the segment SG3. Therefore, the node 100a restores the master data block E in the segment SG3 (to be newly handled by any of the nodes 100a, 200a, and 300a) using the backup data block E1 held by the node 100a.

However, in this example, many inquiries are made between the nodes 100a, 200a, and 300a, meaning that the amount of communication between the nodes increases to restore the master data block. As described above, inquiries are made between the nodes depending on how the contents of the segment management table are distributed among the nodes. The amount of communication for the inquiries between the nodes increases with an increase in the number of data blocks to be inquired, which causes an increase in the load of the network.

By contrast, in the second embodiment, each node stores therein a segment management table indicating correspondences between the master data blocks corresponding to the backup data blocks held by the own node and segment IDs. Therefore, even if a failure occurs in any node, each node is able to confirm whether or not a backup data block held by the own node corresponds to a master data block that has belonged to the segment of the failed node, with reference to the segment management table held by the own node. Therefore, each node does not need to make inquiries to other nodes, unlike the example of FIG. 20. This reduces the amount of communication between the nodes to restore the master data block.

In this connection, the information processing in the first and second embodiments is realized by causing a processor provided in each node to execute an intended program. The program may be recorded in a computer-readable recording medium (for example, the optical disc 13, memory device 14, memory card 16, or the like).

For example, to distribute the program, recording media on which the program is recorded are distributed. Alternatively, the program may be stored in another computer and then may be distributed over a network. The computer may store (install) the program recorded in a recording medium or received from the other computer, in a storage device, such as the RAM 102 or the HDD 103, read the program from the storage device, and execute the program.

According to one aspect, it is possible to reduce the amount of communication between nodes.

## Claims

1. A data allocation method executed in a system including a plurality of nodes (1, 2, 3) to which a plurality of main data blocks (X, Y, Z) is allocated in a distributed manner, the data allocation method comprising:
allocating a plurality of auxiliary data blocks (X1, Y1, Z1) to the plurality of nodes (1, 2, 3) in a distributed manner, the plurality of auxiliary data blocks (X1, Y1, Z1) being backup of the plurality of main data blocks (X, Y, Z);
storing in a node (1) holding auxiliary data blocks (Y1), information indicating correspondences (K1) between main data blocks (Y) corresponding to the auxiliary data blocks (Y1) and nodes (2) holding the main data blocks (Y); and
determining, upon receipt of an access request to access one of the plurality of the main data blocks (X, Y, Z), a node to be accessed, based on the information indicating the correspondences between the main data blocks and the nodes holding the main data blocks.

2. The data allocation method according to claim 1, wherein the allocating a plurality of auxiliary data blocks (X1, Y1, Z1) includes allocating an auxiliary data block (X1) for one main data block (X) to two or more nodes.

3. The data allocation method according to claim 1 or 2, further comprising obtaining a number of simultaneous failed nodes allowed to fail simultaneously among the plurality of nodes, and setting a value greater than the number of simultaneous failed nodes as a number of nodes to which an auxiliary data block for one main data block is to be allocated.

4. The data allocation method according to any one of claims 1 to 3, wherein:
a method of determining an allocation destination for each of the plurality of auxiliary data blocks (X1, Y1, Z1) is independent of a method of determining an allocation destination for each of the plurality of main data blocks (X, Y, Z); and
an allocation of the plurality of auxiliary data blocks (X1, Y1, Z1) is kept unchanged even when one of the plurality of main data blocks is relocated between nodes.

5. The data allocation method according to any one of claims 1 to 4, further comprising:
when one node (3) of the plurality of nodes becomes unavailable, confirming, by another node (2), with reference to the information (K2) indicating the correspondences stored in the other node (2) whether or not an auxiliary data block (Z1) allocated to the other node (2) corresponds to a main data block (Z) allocated to the unavailable node (3); and
restoring, by the other node (2) holding the auxiliary data block (Z1) corresponding to the main data block (Z), the main data block (Z) in a node different from the unavailable node.

6. A computer program that is used in a system including a plurality of nodes (1, 2, 3) to which a plurality of main data blocks (X, Y, Z) is allocated in a distributed manner, the computer program being executable to cause a computer (1) used as one of the plurality of nodes to perform a process comprising:
allocating some (Y1) of a plurality of auxiliary data blocks (X1, Y1, Z1) to a storage device, the plurality of auxiliary data blocks (X1, Y1, Z1) being backup of the plurality of main data blocks (X, Y, Z);
storing, in the storage device, information (K1) indicating correspondences between main data blocks (Y) corresponding to the some auxiliary data blocks (Y1) held by the storage device and nodes (2) holding the main data blocks (Y); and
determining, upon receipt of an access request to access one of the plurality of main data blocks (X, Y, Z), a node to be accessed, based on the information indicating the correspondences between the main data blocks and the nodes holding the main data blocks.

7. An information processing system comprising:
a plurality of nodes (1, 2, 3) each configured to perform a process including:
allocating a plurality of main data blocks (X, Y, Z) and a plurality of auxiliary data blocks (X1, Y1, Z1) to the plurality of nodes in a distributed manner, the plurality of auxiliary data blocks (X1, Y1, Z1) being backup of the plurality of main data blocks (X, Y, Z);
storing, in the each of the plurality of nodes, information indicating correspondences between main data blocks corresponding to auxiliary data blocks held by the each node and nodes holding the main data blocks; and
determining, upon receipt of an access request to access one of the plurality of main data blocks (X, Y, Z), a node to be accessed, based on the information indicating the correspondences between the main data blocks and the nodes holding the main data blocks.
